# EUROPEAN PATENT SPECIFICATION

(11) **EP 2 937 625 B1**
(45) Date of publication and mention of the grant of the patent: **03.11.2021**
(21) Application number: 15163883.0
(22) Date of filing: 16.04.2015
(51) Int. Cl.: F21S 41/148, F21S 41/20, F21S 41/29, F21S 41/365, F21S 41/43, F21S 41/60, F21S 41/663, F21W 102/18

(54) **BI-FUNCTION LED HEAD LAMP USING THIN SHIELD**
BIFUNKTIONELLE LED-KOPFLAMPE MIT DÜNNER ABSCHIRMUNG
LAMPE FRONTALE À DEL BI-FONCTION UTILISANT UNE PROTECTION MINCE

(30) Priority: 25.04.2014 KR 20140050039
(43) Date of publication of application: 28.10.2015
(73) Proprietor: Hyundai Mobis Co., Ltd., Gangnam-gu Seoul 135-977 (KR)
(72) Inventor: Lee, Hyun Soo, 446-912 Gyeonggi-Do (KR)
(74) Representative: VKK Patentanwälte PartG mbB

(56) References cited:
- EP-A1- 2 182 272
- DE-A1- 10 004 699
- DE-A1-102012 102 441
- FR-A1- 2 860 280
- JP-A- 2015 037 037
- KR-A- 20100 069 471
- US-A- 5 307 247
- US-A1- 2010 246 203
- US-A1- 2011 205 748

## Description

### CROSS-REFERENCE TO RELATED APPLICATIONS

This application claims priority to and the benefit of Korean Patent Application No. 10-2014-0050039 filed in the Korean Intellectual Property Office on April 25, 2014.

### TECHNICAL FIELD

The present invention relates to a bi function LED head lamp using a thin shield. More particularly, the present invention relates to a bi function LED head lamp using a thin shield that implements a low beam and a high beam only by turning on and off an LED by applying the thin shield without an actuator.

### BACKGROUND ART

In general, in a head lamp for a vehicle, an actuator of a bi-function module has a disadvantage in generation of noise, increase of cost, and increase of a weight. Further, when an LED bi-function is applied, the head lamp for the vehicle can be actuated without the actuator, but a signal reflection surface is impossible to be positioned by applying a shield fixed to the existing position, and as a result, it is difficult to satisfy a signal regulation.

As one example of a vehicular head lamp technique, Korean Patent Unexamined Publication No. 10-2014-0039884 discloses "Head Lamp for Vehicle Which Prevents Vibration Phenomenon of Beam Pattern in Switching High Beam to Low Beam by Using Moving Shield".

Korean Patent Unexamined Publication No. 10-2014-0036528 discloses "Head Lamp for Vehicle Regarding Rotational Structure of Head Lamp Used in Leveling".

Korean Patent Unexamined Publication No. 10-2010-0114804 discloses "Driving Device of Head Lamp Performing Downward Mode Function to Throw Ray Downward and Upward Mode Function to Throw Ray Upward with One Lamp".

Korean Patent Registration No. 860609 discloses "Projection Type Head Lamp Assembly for Vehicle Which Provides Various Beam Patterns According to Driving Environment of Vehicle".

The publication FR 2 860 280 A1 discloses a bi function LED head lamp with a low beam light source installed at a top side of a partition partitioning the inner space of a reflector into an upper low beam reflector space and a lower high beam reflector space, and with a high beam light source installed at the bottom side of the partition. A signal reflection surface on the lower inner end of a lens holder is not provided.

DE 10 2012 102 441 A1 discloses a head lamp with only one light source and with a deflection surface installed at a lower end of a lens holder. This head lamp has no bi function and the inner space of the reflector is not devided by a partition.

US 201 1/0205748 A1 discloses a bi function head lamp with a low beam light source and a high beam light source mounted on an upper surface and a lower surface of a separator plate respectively. The separator plate, however, does not devide a reflector space into an upper and lower space, as there are two different reflectors for the two beams.

Further the lamp has no lens holder connected with a front surface of a reflector and it has no signal reflection surface at a lower inner end of a lens holder.

### SUMMARY OF THE INVENTION

In order to solve the aforementioned problem, the present invention has been made in an effort to provide a bi function LED head lamp using a thin shield that can implement a low beam and a high beam only by turning on and off an LED by applying the thin shield without an actuator. The present invention is defined in claim 1.

An exemplary embodiment of the present invention provides a bi function LED head lamp using a thin shield including a reflector in which a front inlet is opened and an inner space is partitioned into an upper low beam reflector space and a lower high beam reflector space by a partition installed at the center; a low beam light source installed at a top inner side of the partition so as to be positioned in the upper low beam reflector space; a high beam light source installed at a bottom inner side of the partition so as to be positioned in the lower high beam reflector space; a shield installed at a front end of the partition; a lens holder in which a lens is mounted on the front and the rearis joined to a front surface of the reflector; and a signal reflection surface installed at a lower inner end of the lens holder.

The low beam light source and the high beam light source are LED light sources.

The shield is a thin shield and a hole through which the light passes may be bored at the front end of the shield.

The hole has a semicircular shape.

The signal reflection surface may be formed integrally with the lens holder.

An upper front surface of the signal reflection surface may face the lens and may be formed by an inclined surface that is inclined back upward from the side view.

Both surfaces of the upper front surface and an upper rear surface of the signal reflection surface may be formed by inclined surfaces of which the widths decrease upward from the side view.

According to an exemplary embodiment of the present invention, in a bi function LED head lamp using a thin shield, a low beam and a high beam are implemented only by turning on and off an LED by applying a thin shield.

A signal reflection surface is manufactured integrally with a lens holder to reduce the number of parts and the number of assemblies and remove an assembly tolerance in assembly.

An actuator for actuating a moving shield is not required unlike a moving shield in the related art.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a perspective view of a bi function LED head lamp using a thin shield according to an exemplary embodiment of the present invention.
FIG. 2 is an enlarged diagram of a signal reflection surface according to an exemplary embodiment of the present invention.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION

Hereinafter, exemplary embodiments of the present invention will be described in detail with reference to the accompanying drawings.

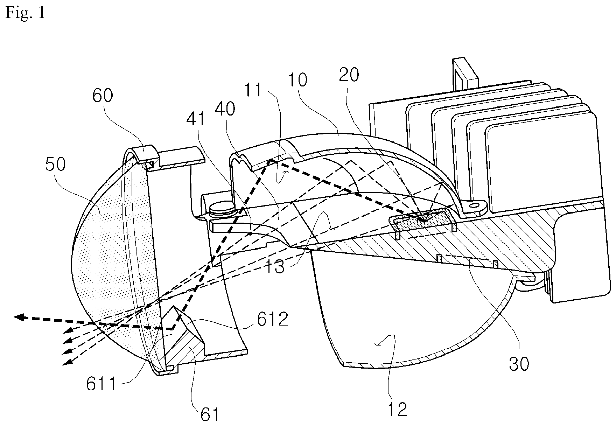

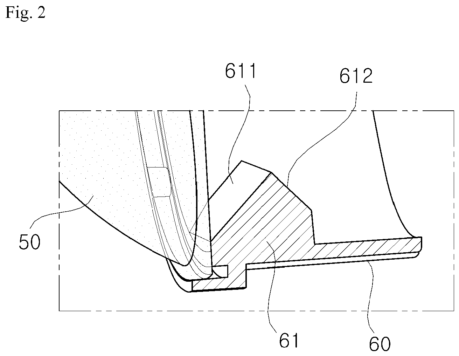

FIG. 1 is a perspective view of a bi function LED head lamp using a thin shield according to an exemplary embodiment of the present invention, and FIG. 2 is an enlarged diagram of a signal reflection surface according to an exemplary embodiment of the present invention. Hereinafter, a configuration of a bi function LED head lamp using a thin shield according to the present invention will be described with reference to the accompanying drawings.

The bi function LED head lamp using the thin shield according to the present inventionincludes a reflector 10 reflecting light irradiated from a light source, a low beam light source 20 and a high beam light source 30 installed at upper and lower sides in the reflector 10, and a lens holder 60 of which a rear side is joined to a front surface of the reflector 10, as illustrated in FIG. 1.

In detail, the reflector 10 serves to reflect the light irradiated from the low beam light source 20 and the high beam light source 30. A front inlet of the reflector 10 joined with the lens holder 60 is opened and the rear side of the reflector 10 is closed. The inside of the reflector 10 is partitioned into an upper low beam reflector space 11 and a lower high beam reflector space 12 by a partition 13 installed at the center therein.

The low beam light source 20 is installed at one top inner end of the partition 13 at the low beam reflector space 11 side. The high beam light source 30 is installed at one bottom inner end of the partition 13 at the high beam reflector space 12 side. The low beam light source 20 and the high beam light source 30 may be light-emitting diode (LED) light sources.

A shield 40 is installed at a front end of the partition 13. The shield 40 serves to vary a pattern of light irradiated to the front of the vehicle by partially limiting a progress direction of light irradiated from the low beam light source 20 and the high beam light source 30.

The shield 40 of the present invention is a thin shield and has a structure designed in such a manner that a high beam is minimally interfered. To this end, a semicircular hole 41 through which the light may pass is bored at a front end of the shield 40. The light of the low beam light source 20 and the high beam light source 30 may pass through the semicircular hole 41. The thickness of the center of the shield 40 is very thin as approximately 0.1 mm. The low beam is formed by using the shield 40 and further, the shield 40 is very thin, and as a result, the high beam is minimally interfered.

The lens holder 60 serves to link a lens 50 and the reflector 10. The lens 50 is mounted on the front of the lens holder 60 and the rear of the lens holder 60 is joined to the front of the reflector 10. The lens 50 is an aspherical lens.

A signal reflection surface 61 is formed at one inner lower end of the lens holder 60. The signal reflection surface is preferably manufactured integrally with the lens holder 60 in order to reduce the number of assemblies.

In detail, an upper front surface 611 and an upper rear surface 612 of the signal reflection surface 61 are formed by inclined surfaces of which the widths decrease upward from the side view as illustrated in FIG. 2. The upper rear surface 612 of the signal reflection surface 61 is installed to face the reflector 10 and the upper front surface 611 of the signal reflection surface 61 is installed to face the lens 50.

As marked by dotted lines displayed in FIG. 1, the upper front surface 611 of the signal reflection surface 61 needs to be particularly an inclined surface so as for the beam to be irradiated to a signal zone. The upper rear surface 612 need not particularly be the inclined surface, but the upper rear surface 612 is preferably formed by the inclined surface in order to reduce an area.

Hereinafter, an operation of the bi function LED head lamp using the thin shield according to the present invention will be described in detail with reference to the accompanying drawings.

As illustrated in FIGS. 1 and 2, the bi function LED head lamp using the thin shield according to the present invention may implement a bi-function of the low beam and the high beam only by turning on and off the low beam light source 20 and the high beam light source 30.

In detail, when power is applied to the high beam light source 30, the light of the high beam light source 30 is reflected on an inner wall of a high beam reflector space 12 as illustrated in FIG. 1. The light reflected on the inner wall of the high beam reflector space 12 sequentially passes through the semicircular hole 41 of the shield 40 and the lens 50 to form the high beam.

On the contrary, when the power is applied to the low beam light source 20, the light of the low beam light source 20 is reflected on an inner wall of a low beam reflector space 11. The light reflected on the inner wall of the low beam reflector space 11 sequentially passes through the semicircular hole 41 of the shield 40 and the lens 50 to form the low beam.

In this case, since some light of the low beam light source 20 reflected on the inner wall of the low beam reflector space 11 is reflected to the signal zone by the upper front surface 611 of the signal reflection surface 61, horizontal -8 to 8° and vertical 2 to 4° which are signal regulation areas may be satisfied.

In the bi function LED head lamp using the thin shield according to an exemplary embodiment of the present invention, the low beam and the high beam may be implemented only by turning on and off an LED by applying the thin shield. Further, the signal reflection surface is manufactured integrally with the lens holder to reduce the number of parts and the number of assemblies and remove an assembly tolerance during assembly. An actuator for actuating a moving shield is not required unlike a moving shield in the related art.

As described above, the exemplary embodiments have been described and illustrated in the drawings and the specification. The exemplary embodiments were chosen and described in order to explain certain principles of the invention and their practical application, to thereby enable others skilled in the art to make and utilize various exemplary embodiments of the present invention, as well as various alternatives and modifications thereof. As is evident from the foregoing description, certain aspects of the present invention are not limited by the particular details of the examples illustrated herein. The invention is limited only by the claims which follow.

## Claims

1. A bi function LED head lamp, comprising:
a reflector (10) in which a front inlet is opened and an inner space is partitioned into an upper low beam reflector space (11) and a lower high beam reflector space (12) by a partition (13) installed at the center;
a low beam light source (20) installed at a top inner side of the partition (13) so as to be positioned in the upper low beam reflector space (11);
a high beam light source (30) installed at a bottom inner side of the partition (13) so as to be positioned in the lower high beam reflector space (12);
a shield (40) installed at a front end of the partition;
a lens holder (60) in which a lens (50) is mounted on the front and the rear side is joined to a front surface of the reflector (10); **characterized in that** the head lamp comprises
a signal reflection surface (61) installed at a lower inner end of the lens holder (60),
and **in that** the shield (40) is a thin shield and a semicircular hole (41) through which light of the light sources passes is formed at a front end of the shield (40),
and the hole (41) has a semicircular shape such that light of the low beam light source (20) and the high beam light source (30) passes through the semicircular hole (41).

2. The lamp of claim 1, wherein the signal reflection surface (61) is formed integrally with the lens holder (60).

3. The lamp of claim 2, wherein an upper front surface (611) of the signal reflection surface (61) faces the lens (50) and is formed by an inclined surface that is inclined back upward from the side view.

4. The lamp of claim 2, wherein both surfaces of the upper front surface (611) and an upper rear surface (612) of the signal reflection surface (61) are formed by inclined surfaces of which the widths decrease upward from the side view.

## Patentansprüche

1. Bifunktions-LED-Scheinwerfer, der umfasst:
einen Reflektor (10), in dem ein Fronteinlass geöffnet ist, und in dem ein Innenraum in einen oberen Abblendlichtreflektorraum (11) und einen unteren Fernlichtreflektorraum (12) durch eine Trennwand (13), die in der Mitte installiert ist, getrennt ist;
eine Abblendlichtquelle (20), die auf einer oberen Innenseite der Trennwand (13) derart installiert ist, dass sie in dem oberen Abblendlichtreflektorraum (11) positioniert ist;
eine Fernlichtquelle (30), die auf einer unteren Innenseite der Trennwand (13) derart installiert ist, dass sie in dem unteren Fernlichtreflektorraum (12) positioniert ist;
eine Abschirmung (40), die an einem Frontende der Trennwand installiert ist;
einen Linsenhalter (60), in dem eine Linse (50) auf der Frontseite montiert ist, und in dem die Rückseite mit einer Frontoberfläche des Reflektors (10) verbunden ist; **dadurch gekennzeichnet, dass** der Scheinwerfer
eine Signalreflexionsoberfläche (61), die an einem unteren inneren Ende des Linsenhalters (60) installiert ist, umfasst,
und dass die Abschirmung (40) eine dünne Abschirmung ist, und ein halbkreisförmiges Loch (41), durch das Licht der Lichtquellen durchgeht, an einem Frontende der Abschirmung (40) gebildet ist,
und das Loch (41) eine halbkreisförmige Form derart aufweist, dass Licht der Abblendlichtquelle (20) und der Fernlichtquelle (30) durch das halbkreisförmige Loch (41) durchgeht.

2. Scheinwerfer nach Anspruch 1, wobei die Signalreflexionsoberfläche (61) integral mit dem Linsenhalter (60) gebildet ist.

3. Scheinwerfer nach Anspruch 2, wobei eine obere Frontoberfläche (611) der Signalreflexionsoberfläche (61) der Linse (50) zugewandt ist und durch eine geneigte Oberfläche, die von der Seitenansicht rückwärts nach oben geneigt ist, gebildet ist.

4. Scheinwerfer nach Anspruch 2, wobei beide Oberflächen der oberen Frontoberfläche (611) und einer oberen Rückseitenoberfläche (612) der Signalreflexionsoberfläche (61) durch geneigte Oberflächen, deren Breiten von der Seitenansicht nach oben abnehmen, gebildet sind.

## Revendications

1. Lampe frontale à DEL bi-fonction, comprenant :
un réflecteur (10) dans lequel une entrée avant est ouverte et un espace intérieur est séparé en un espace de réflecteur à faisceau de faible portée supérieur (11) et un espace de réflecteur à faisceau de grande portée inférieur (12) par une séparation (13) installée au centre ;
une source de lumière de faisceau de faible portée (20) installée au niveau d'un côté intérieur supérieur de la séparation (13) de sorte à être positionnée dans l'espace de réflecteur à faisceau de faible portée supérieur (11) ;
une source de lumière de faisceau de grande portée (30) installée au niveau d'un côté intérieur inférieur de la séparation (13) de sorte à être positionnée dans l'espace de réflecteur de faisceau de grande portée inférieur (12) ;
une protection (40) installée à une extrémité avant de la séparation ;
un support de lentille (60) dans lequel une lentille (50) est montée sur le côté avant et le côté arrière est joint à une surface avant du réflecteur (10) ; **caractérisée en ce que** la lampe frontale comprend
une surface de réflexion de signal (61) installée à une extrémité intérieure inférieure du support de lentille (60),
et **en ce que** la protection (40) est une protection mince et un trou semi-circulaire (41) à travers lequel de la lumière des sources de lumière passe est formé à une extrémité avant de la protection (40),
et le trou (41) présente une forme semi-circulaire de sorte que la lumière de la source de lumière de faisceau de faible portée (20) et la source de lumière de faisceau de grande portée (30) passe à travers le trou semi-circulaire (41).

2. Lampe selon la revendication 1, dans laquelle la surface de réflexion de signal (61) est formée d'un seul tenant avec le support de lentille (60).

3. Lampe selon la revendication 2, dans laquelle une surface avant supérieure (611) de la surface de réflexion de signal (61) fait face à la lentille (50) et est formée par une surface inclinée qui est inclinée à nouveau vers le haut depuis la vue de côté.

4. Lampe selon la revendication 2, dans laquelle les deux surfaces de la surface avant supérieure (611) et une surface arrière supérieure (612) de la surface de réflexion de signal (61) sont formées par des surfaces inclinées dont les largeurs diminuent vers le haut depuis la vue de côté.
